# EUROPEAN PATENT APPLICATION

(11) **EP 3 466 658 A1**
(43) Date of publication of application: **10.04.2019**
(21) Application number: 17802643.1
(22) Date of filing: 17.05.2017
(51) Int. Cl.: B29C 70/48, B29C 43/12, B29C 43/32

(54) **METHOD FOR MANUFACTURING COMPOSITE MATERIAL MOLDING**

(30) Priority: 27.05.2016 JP 2016106008
(71) Applicant: Rimtec Corporation, Chiyoda-ku Tokyo 100-0005 (JP)
(72) Inventor: TAKEUCHI, Masaki, Chiyoda-ku, Tokyo 100-0005 (JP)
(74) Representative: Adam, Holger
(86) International application number: PCT/JP2017/018514
(87) International publication number: WO 2017/204051

(57) **Abstract**

A method for producing a composite material molded article, including laminating a fibrous filler on a mold; pressure-reducing inside an airproof space, the airproof space being formed with the mold laminated with the fibrous filler and an airproof film covering thereon; and impregnating a resin material in the fibrous filler, the formation of the airproof space including bonding the mold and the airproof film with a seal material containing a (meth)acrylic polymer as an adhesive. The composite resin molded article obtained by the method of the present invention can be suitably used in fields in which composite materials of fibrous fillers such as glass fibers and carbon fibers are generally used, for example, housings, structural members, and the like for moving objects or movable objects.

## Description

### TECHNICAL FIELD

The present invention relates to a method for producing a composite material molded article.

### BACKGROUND ART

As methods for producing composite material molded articles, infusion molding which is environmental-friendly and free of soils and odors has been remarked.

The infusion molding is a method in which a film is used in an upper mold to keep an airproof state between the film and a lower mold, the method including filling a resin material by vacuum pressure, and allowing them to impregnate, and butyl rubber is widely used in the bonding of the lower mold and the film (see, Patent Publication 1)

### PRIOR ART REFERENCES

### PATENT PUBLICATIONS

Patent Publication 1: Japanese Patent Laid-Open No. 2014-148133

### SUMMARY OF THE INVENTION

### PROBLEMS TO BE SOLVED BY THE INVENTION

However, the butyl rubber has some disadvantages of being dissolved depending upon the kinds of a resin material injected, and when a seal material is dissolved, the airproof property of the molding member is impaired, so that the seal material is admixed with the resin material as impurities as well as admixture of bubbles, thereby raising a concern that strength of the composite material molded article is lowered.

An object of the present invention is to provide a method for efficiently producing a composite material molded article having excellent strength without being admixed with bubbles or impurities.

### MEANS TO SOLVE THE PROBLEMS

The gist of the present invention relates to a method for producing a composite material molded article, including
laminating a fibrous filler on a mold;
pressure-reducing inside an airproof space, the airproof space being formed with the mold laminated with the fibrous filler and an airproof film covering thereon; and
impregnating a resin material in the fibrous filler,
the formation of the airproof space including bonding the mold and the airproof film with a seal material containing a (meth)acrylic polymer as an adhesive.

### EFFECTS OF THE INVENTION

According to the method of the present invention, a composite material molded article having excellent strength can be efficiently produced without being admixed with bubbles and impurities.

### MODES FOR CARRYING OUT THE INVENTION

When a composite material molded article is produced according to infusion molding, the present invention has a great feature in the aspect of the use of a seal material containing a (meth)acrylic polymer as an adhesive for bonding a mold and an airproof film. The (meth)acrylic polymer, in contrast to a conventionally widely used butyl rubber as an adhesive, has a polar functional group and does not dissolve in a resin material, so that a composite material molded article can be produced without impairing airproof state and seal-tightness of the molding member, and would not be admixed in the resin material as impurities, so that a composite material molded article having excellent strength and transparency can be obtained.

The method of the present invention according to the infusion molding is a method including the following laminating step, pressure-reducing step, and impregnating step.

The laminating step is a step of laminating a fibrous filler in a mold.

The fibrous filler usable in the present invention is not particularly limited, so long as the fibrous filler is usable in the fields of the present invention. The fibrous filler is preferably carbon fibers and glass fibers, from the viewpoint of availability and usefulness, and both may be used together. When the carbon fibers and the glass fibers are used together, a mixing ratio of the two is not particularly limited, and is preferably 0.1 to 10 parts by mass of the glass fibers based on 1 part by mass of the carbon fibers, from the viewpoint of the mixing effects.

The carbon fibers used in the present invention are not particularly limited, and, for example, various carbon fibers produced by conventionally known methods, such as acrylic, pitched, rayon-based carbon fibers can be optionally used. Among them, PAN-based carbon fibers which are produced using polyacrylonitrile fibers as a raw material are preferably used, because properties such as mechanical strength and heat resistance in the composite material molded article obtained can be improved, when a polymerizable composition described later is used, without causing inhibition of the metathesis ring-opening polymerization reaction.

The basis weight of the carbon fibers is properly selected depending upon the purpose of use, and the basis weight is preferably from 50 to 500 g/m², more preferably from 100 to 400 g/m², and even more preferably from 200 to 300 g/m², from the viewpoint of resin filling property, fiber volume content (Vf), and diluent property.

Since the carbon fibers can maintain their rigidity when the moduli are higher, the thickness of the carbon fibers-reinforced composite material molded article can be favorably thinned. On the other hand, when the moduli are too high, the tensile elongation may be lowered in some cases. As the carbon fibers, the tensile modulus according to the resin-impregnated strand tensile test (JIS R-7601) is preferably within the range of from 200 to 400 GPa, and more preferably within the range of from 220 to 300 GPa. In addition, the carbon fibers having higher tensile elongation are preferred. The tensile elongation is preferably 1.7% or more, more preferably 1.85% or more, and even more preferably 2% or more. Although the upper limit of the tensile elongation is not particularly limited, the upper limit is usually 2.5% or less. The tensile elongation of the carbon fibers can be measured according to the above resin-impregnated strand tensile test. The higher the tensile elongation of the carbon fibers, the stronger and the more easily handleable the fibers, so that the mechanical strength of the composite material molded article obtained becomes favorably high.

When a polymerizable composition described later is used, it is preferable that at least an active hydrogen-containing group such as a carboxyl group or a hydroxyl group is present in a proper amount on a surface of the carbon fibers, from the viewpoint of even more improving close contact of the carbon fibers with the resin material.

The surface condition of the carbon fibers is not particularly limited, which may be smooth or rough. It is preferable that the surface condition is rough because anchoring effects can be expected.

The cross-sectional shape of the carbon fibers is not particularly limited, and the cross-sectional shape is preferably substantially circular. When the cross-sectional shape is circular, realignment of the filaments is more likely to take place when the carbon fibers are impregnated with a resin material, thereby facilitating the penetration of the resin material between the fibers.

The length of the carbon fibers may be suitably selected depending upon the applications, and any one of short fibers and long fibers can be used. The length of the carbon fibers is usually 1 cm or more, preferably 2 cm or more, and more preferably 3 cm or more, from the viewpoint of further increasing mechanical strength of the composite material molded article obtained, and it is especially preferable to use carbon fibers that are continuous fibers.

It is not necessary that the carbon fibers used in the present invention are previously adhered to a sizing agent, it is preferable that carbon fibers to which a sizing agent is previously adhered are used, from the viewpoint of further improving disadvantages such as the lowering of the physical properties after molding due to fiber fluffing, or close contact between the cycloolefin polymer and the carbon fibers when the polymerizable composition is used.

The sizing agent is not particularly limited, and a known one can be used. The sizing agent includes, for example, at least one member selected from the group consisting of epoxy resins; urethane resins; vinyl ester resins; polyamide resins; polyolefin resins such as nylon resins, polyethylene, and polypropylene; polyester resins; and phenol resins. As the sizing agent, at least one member selected from the group consisting of epoxy resins, urethane resins, vinyl ester resins, and polyolefin resins is preferred, and an epoxy resin and/or a vinyl ester resin is more preferred, because of easy availability.

Here, it is preferable that the adhesion of the sizing agent to the carbon fibers is carried out after the introduction of an active hydrogen-containing group or after the introduction of roughness to the carbon fiber surface mentioned above.

The glass fibers usable in the present invention are not particularly limited, and include, for example, those having the forms of continuous fibers, woven fabrics and nonwoven fabrics, and the like, and those having various thicknesses are available as commercial products. The forms and the thickness of the glass fibers can be properly selected according to the applications of the composite material molded articles obtained.

The basis weight of the glass fibers usable in the present invention is properly selected depending upon the use and purposes, and the basis weight is preferably 200 g/m² or more, more preferably from 200 to 2,000 g/m², and even more preferably from 300 to 1,800 g/m². When the basis weight of the glass fibers is too small, some spaces are created among the neighboring glass fibers, so that the mechanical strength of the composite material molded article obtained would be insufficient. On the other hand, when the basis weight is exceedingly large, flexibility is lowered, and the parts overlaying with the neighboring glass fibers themselves would be created, so that the impregnation property of the resin material is likely to be impaired.

It is preferable that the glass fibers are subjected to hydrophobic treatment on their surface. By using the hydrophobically treated glass fibers, the glass fibers can be homogeneously dispersed in the composite material molded article obtained, so that rigidity and dimensional stability of the composite material molded article can be made even, and further that isotropy can be made smaller. The treatment agent usable in the hydrophobic treatment includes silane coupling agents, titanate coupling agents, aluminum coupling agents, fatty acids, fats and oils, surfactants, waxes, other polymers, and the like. These treatment agents can also serve as a sizing agent.

The form of the fibrous filler usable in the present invention is not particularly limited, which may be properly selected from a unidirectional material in which a fibrous filler is aligned in one direction, a woven fabric, a nonwoven fabric, matte, knit, braded cords, roving, chopped strands, or the like. Among them, a continuous fibrous form such as a unidirectional material, a woven fabric or a roving is preferred, and a unidirectional material is more preferred. The unidirectional material is preferred because impregnation property of the resin material can be improved to a high level, and a proportion of the fibers is high, so that the mechanical strength of the composite material molded article obtained can be improved to a high level.

As the form of the woven fabric, a conventionally known one is utilizable, and, for example, all the woven structures in which the fibers crisscross such as plain weave, satin weave, twill, and triaxial woven fabric can be utilized. In addition, as the form of the woven fabric, not only two-dimensional woven fabrics but also stitched woven fabrics, three-dimensional woven fabrics and the like, in which fibers are reinforced in a thickness direction of the woven fabrics, can be utilized.

The materials and the shapes of the mold usable in the present invention may be properly selected depending upon the applications of the composite material molded article, and the like. The materials include metals such as aluminum, nickel electroforms, steel, and ZAS (zinc alloys); epoxy resins, unsaturated polyester resins, dicyclopentadiene resins, and resins in which a metal powder or a metal salt such as silica or alumina is dispersed; and the like.

The thickness of the laminated fibrous filler is usually from 1 to 200 mm or so.

A mold releasing agent may be applied between a mold and a fibrous filler layer, in order to mold-release the two.

The mold releasing agent to be applied may be any of those that are generally used, and a silicone-based or fluororesin-based mold releasing agent or the like is used.

The pressure-reducing step is a step of pressure-reducing inside an airproof space, the airproof space being formed with the mold laminated with the fibrous filler and an airproof film covering thereon.

The airproof film usable in the present invention is not particularly limited, so long as it is a material that can cover a mold on which a fibrous filler is laminated in an airproof state, and the airproof film includes, for example, airproof films made of resins such as nylon, polyethylene, polypropylene, and polyvinyl chloride.

As the thickness of the airproof film, one having a thickness of from 20 to 100 µm is preferably used, from the viewpoint of flexibility and strength.

In the present invention, as mentioned above, the formation of the airproof space includes bonding a mold and an airproof film with a seal material containing a (meth)acrylic polymer as an adhesive.

The monomer component of the (meth)acrylic polymer usable in the present invention includes alkyl (meth)acrylate having an alkyl group having usually from 1 to 18 carbon atoms and/or vinyl compounds having at least one acid group (These monomers are hereinafter collectively referred to as "main monomer components."). The (meth)acrylic polymer may be a polymer of a single monomer component, or may be a copolymer of two or more monomer components.

The above alkyl (meth)acrylate includes, for example, methyl (meth)acrylate, n-propyl (meth)acrylate, ethyl (meth)acrylate, n-propyl (meth)acrylate, n-butyl (meth)acrylate, t-butyl (meth)acrylate, 2-ethylhexyl (meth)acrylate, isooctyl (meth)acrylate, isononyl (meth)acrylate, dodecyl (meth)acrylate, and the like, and these alkyl (meth)acrylates can be used alone or in two or more kinds.

The above vinyl compound includes, for example, (meth)acrylic acid, itaconic acid, 2-(meth)acryloyloxypropyl sulfonate, and (meth)acryloyloxyethyl phosphate, and the like, and these vinyl compounds can be used alone or in two or more kinds.

In addition, as the monomer component other than the above, for example, a hydroxyl group-containing monomer such as 2-hydroxyethyl (meth)acrylate, 2-hydroxypropyl (meth)acrylate, 4-hydroxybutyl (meth)acrylate, or hydroxyhexyl (meth)acrylate; a nitrogen-containing (meth)acrylate such as (meth)acrylamide or acryloylmorpholine; or a polar monomer such as vinyl acetate may be used. These monomer components can be used alone or in two or more kinds. These monomer components are effective for increasing aggregative force of the adhesive. These monomer components are used, based on 100 parts by mass of the above main monomer components, in an amount of preferably 100 parts by mass or less, and more preferably 50 parts by mass or less.

Also, a monomer component for forming a polymer having a high glass transition point such as (meth)acrylonitrile, styrene, vinylidene chloride, or vinyl propionate may be used. These monomer components are used, based on 100 parts by mass of the above main monomer components, in an amount of preferably 100 parts by mass or less, and more preferably 50 parts by mass or less. In addition, since these monomer components make the (meth)acrylic polymer hard, it is preferable that these monomer components are added so that the stress at 300% elongation in the stress-strain test in an adhesive layer would be within the range of 5 N/cm² or less.

The above (meth)acrylic polymer is obtained by, for example, solution polymerization of the above monomer components in an optional hydrocarbon solvent. The method of synthesis is not particularly limited, and any of the method of charging the monomers to the reaction vessel at once to polymerize, the method of stepwise adding monomers to polymerize, or the like may be used. The polymerization time is not particularly limited, and is usually from 2 to 24 hours or so.

The molecular weight of the above (meth)acrylic polymer, as the weight-average molecular weight calculated as polystyrene determined by gel permeation chromatography (eluent: tetrahydrofuran) is usually from 350,000 to 490,000, preferably from 380,000 to 480,000, more preferably from 400,000 to 480,000, even more preferably from 400,000 to 460,000, and especially preferably from 410,000 to 450,000.

The shape of the seal material is not particularly limited, and the above (meth)acrylic polymer may be directly applied to a bonded side between the airproof film and the mold. In the present invention, it is preferable to use as the seal material a double-sided tape in which the above (meth)acrylate polymer is adhered on front and back sides, from the viewpoint of facilitation in handling.

The basal material for the double-sided tape includes polyesters, polyolefins, and the like.

Here, the seal material may properly contain an additive such as an adhesive other than the above (meth)acrylic polymer, an antioxidant, or a filler, within the range that would not impair the effects of the present invention.

Also, in the present invention, a mold releasing film for accelerating removal of the airproof film, or a resin flow material for allowing the resin material supplied within an airproof space to diffuse and flow so that the resin material can be quickly and evenly impregnated in the fibrous filler layer may be optionally provided along the fibrous filler layer.

The above mold releasing film is not particularly limited, and includes, for example, silicon-coated nylon cloths having fine pores that easily allow the resins to pass and having excellent mold releasing property with the matrix resin.

The above resin flow material is not particularly limited so long as the injected resin material can be distributed along a side contacting a resin diffusion medium of the fibrous filler layer through voids of the resin flow material. The resin flow material includes, for example, one having network forms, made of polypropylene and polyethylene.

The pressure reduction within the airproof space is not particularly limited, and, for example, an aspiration tube having an aspiration opening is placed within an airproof space, and end of a tube or a hose connected with a reduced pressure pump such as an oil pump or a vacuum pump is inserted into the airproof space from seem parts or the like of an airproof film to join with the aspiration tube, whereby a pressure reduction can be carried out via the tube or the hose and the aspiration tube.

The pressure inside the airproof space during the pressure reduction is preferably 100 Pa or lower, and more preferably as low as possible. In other words, the closer the pressure is to vacuum, the degree of impregnation of the resin material in the subsequent impregnation step, i.e., the voids or the like become less, and the rate of impregnation to the fibrous filler layer becomes faster.

The impregnating step is a step of impregnating a resin material in the fibrous filler.

The resin material is not particularly limited, and includes thermosetting resins, thermoplastic resins, and the like.

The thermosetting resin includes thermosetting resins such as unsaturated polyester resins, acrylic resins, vinyl ester resins, alkyd resins, amino resins, epoxy resins, urethane resins, phenol resins, and silicone resins. Also, the thermoplastic resin includes polyethylene resins, polypropylene resins, polystyrene resins, polybutadiene resins, styrene-butadiene resins, polyacetal resins, polyamide resins, polycarbonate resins, polyphenylene ether resins, polyethylene terephthalate resins, polybutylene terephthalate resins, polyarylate resins, polystyrene resins, poly(ether sulphones) resins, polyimide resins, polyamide-imide resins, polyphenylene sulfide resins, polyoxybenzoyl resins, polyether ether ketone resins, polyether imide resins, acetate cellulose resins, and the like.

In addition, in the resin material, a polymerizable composition containing raw material monomers of the resins may be used. It is preferable that the polymerizable composition contains a cycloolefin monomer and a metathesis polymerization catalyst, from the viewpoint of low viscosity and fast curability.

The cycloolefin monomer is a compound having an alicyclic structure and a carbon-carbon double bond within the molecule.

The alicyclic structure constituting the cycloolefin monomer includes monocyclic, polycyclic, condensed polycyclic, bridged ring, and combination polycyclic thereof, and the like. The carbon number constituting the alicyclic structure is not particularly limited, but the number is usually 4 to 30, preferably 5 to 20 and more preferably 5 to 15.

The cycloolefin monomer includes mono cycloolefin monomer, norbornene-based monomer and the like. The norbornene-based monomer is preferred. The norbornene-based monomer is a cycloolefin monomer having a norbornene ring structure within a molecule, which may be substituted by a hydrocarbon group such as an alkyl group, an alkenyl group, an alkylidene group, or an aryl group, or so long as it is within the range in which the exhibition of the desired effects of the present invention is not inhibited, the monomer may be substituted by a polar group, or the like. In addition, the norbornene-based monomer may have a double bond besides the double bond of norbornene-ring.

The mono cycloolefin monomer includes cyclobutene, cyclopentene, cyclooctene, cyclododecene, cyclopentadiene, 1,5-cyclooctadiene and the like.

Specific examples of the norbornene-based monomer include:
dicyclopentadienes such as dicyclopentadiene and methyldicyclopentadiene;
tetracyclododecenes such as tetracyclo[6.2.1.1^{3,6}.0^{2,7}]dodec-4-ene, 9-ethylidenetetracyclo[6.2.1.1^{3,6}.0^{2,7}]dodec-4-ene, 9-phenyltetracyclo[6.2.1.1^{3,6}.0^{1,7}]dodec-4-ene, tetracyclo[6.2.1.1^{3,6}.0^{1,7}]dodec-9-en-4-carboxylate, and tetracyclo [6.2.1.1^{3,6}.0^{2,7}]dodec-9-en-4,5-dicarboxylic anhydride;
norbornenes such as 2-norbornene, 5-ethylidene-2-norbornene, 5-vinyl-2-norbornene, 5-phenyl-2-norbornene, 5-norbornen-2-yl acrylate, 5-norbornen-2-yl methacrylate, 5-norbornene-2-carboxylate, 5-norbornene-2,3-dicarboxylate, and 5-norbornene-2,3-dicarboxylic anhydride;
oxanorbornenes such as 7-oxa-2-norbornene and 5-ethylidene-7-oxa-2-norbornene;
tetra or higher polycycloolefins such as tetracyclo[9.2.1.0^{2,10}.0^{3,8}]tetradeca-3,5,7,12-tetraene (also called 1,4-methano-1,4,4a,9a-tetrahydro-9H-florene), pentacyclo[6.5.1.1^{3,6}.0^{2,7}.0^{9,13}]pentadeca-4,10-diene, pentacyclo[9.2.1.0^{2,10}.0^{3,8}]pentadeca-5,12-diene, and tricyclopentadiene; and the like.

Among these cycloolefin monomers, the cycloolefin monomer having no polar groups is preferred because a low-water-absorbable molded article can be obtained. In addition, when a cycloolefin monomer having an aromatic condensed ring such as tetracyclo[9.2.1.0^{2,10},0^{3,8}]tetradeca-3,5,7,12-tetraene is used, the viscosity of the polymerizable composition can be lowered.

These cycloolefin monomers may be each used alone or may be used in a combination of two or more kinds. By using the monomers in combination, the physical properties of the cycloolefin-based resin obtained can be appropriately adjusted.

Here, the polymerizable composition used in the present invention may contain an optional monomer which is copolymerizable with the above-mentioned cycloolefin monomer, so long as the exhibition of the effects of the present invention is not impaired.

The metathesis polymerization catalyst usable in the present invention is not particularly limited, so long as the cycloolefin monomer can be subjected to ring-opening polymerization, and a known one can be used.

The metathesis polymerization catalyst usable in the present invention is a complex composed of a transition metal atom as a center atom and plural ions, atoms, multi-atomic ions, and/or compounds bound thereto. As the transition metal atom, the atoms of Groups 5, 6 and 8 (Long-period type Periodic Table, hereinafter referred to the same) are used. Although the atoms of each of the Groups are not particularly limited, the atoms of Group 5 include, for example, tantalum, the atoms of Group 6 include, for example, molybdenum and tungsten, and the atoms of Group 8 include, for example, ruthenium and osmium. Among these transition metal atoms, ruthenium and osmium of Group 8 are preferred. In other words, the metathesis polymerization catalyst usable in the present invention is preferably a complex with ruthenium or osmium as a center atom, and more preferably a complex with ruthenium as a center atom. As the complex with ruthenium as a center atom, a ruthenium-carbene complex composed of ruthenium and carbene compounds coordinated thereto is preferred. Here, the term "carbene compound" collectively refers to compounds having a methylene free radical, which are compounds having a divalent carbon atom (carbene carbon) that is not electrically charged, as represented by (>C:). Since the ruthenium-carbene complex has excellent catalytic activity upon the bulk ring-opening polymerization, the polymer obtained has less odor originated from unreacted monomers, so that a high-quality polymer is obtained with excellent productivity. In addition, the complex is relatively stable against oxygen or water in the air, and is less likely to be deactivated, so that the complex can be used in the air. The metathesis polymerization catalyst may be used alone or in a combination of plural kinds.

The ruthenium-carbene complex includes a complex represented by the following general formula (1) or general formula (2).

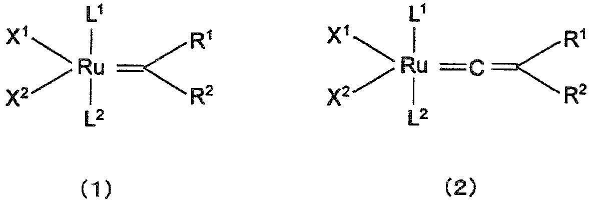

In the above general formulas (1) and (2), each of R¹ and R² is independently a hydrogen atom; a halogen atom; or an organic group having from 1 to 20 carbon atoms, which may contain a halogen atom, an oxygen atom, a nitrogen atom, a sulfur atom, a phosphorus atom, or a silicon atom, and these groups may have a substituent, or may be bound to each other to form a ring. Examples of R¹ and R² that are bound to each other to form a ring include an indenylidene group which may have a substituent such as a phenylindenylidene group.

Specific examples of the organic group having from 1 to 20 carbon atoms which may contain a halogen atom, an oxygen atom, a nitrogen atom, a sulfur atom, a phosphorus atom, or a silicon atom include an alkyl group having from 1 to 20 carbon atoms, an alkenyl group having from 2 to 20 carbon atoms, an alkynyl group having from 2 to 20 carbon atoms, an aryl group having from 6 to 20 carbon atoms, an alkoxy group having from 1 to 20 carbon atoms, an alkenyloxy group having from 2 to 20 carbon atoms, an alkynyloxy group having from 2 to 20 carbon atoms, an aryloxy group having from 6 to 20 carbon atoms, an alkylthio group having from 1 to 8 carbon atoms, a carbonyloxy group, an alkoxycarbonyl group having from 1 to 20 carbon atoms, an alkylsulfonyl group having from 1 to 20 carbon atoms, an alkylsulfinyl group having from 1 to 20 carbon atoms, an alkylsulfonic acid group having from 1 to 20 carbon atoms, an arylsulfonic acid group having from 6 to 20 carbon atoms, a phosphonic acid group, an arylphosphonic acid group having from 6 to 20 carbon atoms, an alkylammonium group having from 1 to 20 carbon atoms, and an arylammonium group having from 6 to 20 carbon atoms, and the like. These organic groups having from 1 to 20 carbon atoms which may contain a halogen atom, an oxygen atom, a nitrogen atom, a sulfur atom, a phosphorus atom, or a silicon atom may have a substituent. Examples of the substituent include an alkyl group having from 1 to 10 carbon atoms, an alkoxy group having from 1 to 10 carbon atoms, and an aryl group having from 6 to 10 carbon atoms, and the like.

Each of X¹ and X² is independently any anionic ligand. The anionic ligand refers to a ligand having a negative electric charge when separated from a center metal atom, and includes, for example, a halogen atom, a diketonate group, a substituted cyclopentadienyl group, an alkoxyl group, an aryloxy group, a carboxyl group, and the like.

L¹ and L² stand for a heteroatom-containing carbene compound or a neutral electron donating compound other than the heteroatom-containing carbene compound. The heteroatom-containing carbene compound and the neutral electron donating compound other than the heteroatom-containing carbene compound are compounds having neutral electric charges when separated from the center metal. The heteroatom-containing carbene compound is preferred, from the viewpoint of improving catalytic activity. The heteroatom means atoms of Groups 15 and 16 of the Periodic Table, and specific examples include a nitrogen atom, an oxygen atom, a phosphorus atom, a sulfur atom, an arsenic atom, a selenium atom, and the like. Among them, a nitrogen atom, an oxygen atom, a phosphorus atom, and a sulfur atom are preferred, and a nitrogen atom is more preferred, from the viewpoint of obtaining a stable carbene compound.

As the above heteroatom-containing carbene compound, a compound represented by the following general formula (3) or (4) is preferred, and, from the viewpoint of improving catalytic activity, the compound represented by the following general formula (3) is more preferred.

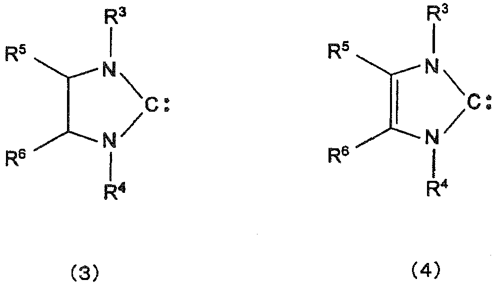

In the above general formulas (3) and (4), each of R³, R⁴, R⁵ and R⁶ stands for independently a hydrogen atom; a halogen atom; or an organic group having from 1 to 20 carbon atoms which may contain a halogen atom, an oxygen atom, a nitrogen atom, a sulfur atom, a phosphorus atom, or a silicon atom. Specific examples of the organic group having from 1 to 20 carbon atoms which may contain a halogen atom, an oxygen atom, a nitrogen atom, a sulfur atom, a phosphorus atom, or a silicon atom are the same as those cases for the above general formulas (1) and (2).

Alternatively, R³, R⁴, R⁵ and R⁶ may be bound to each other in any combinations to form a ring.

Here, since the effects of the present invention become more remarkable, it is preferable that R⁵ and R⁶ are hydrogen atoms. In addition, R³ and R⁴ are preferably aryl groups which may have a substituent, and more preferably a phenyl group having an alkyl group having from 1 to 10 carbon atoms as the substituent, and even more preferably a mesityl group.

The above neutral electron donating compound includes, for example, an oxygen atom, water, carbonyls, ethers, nitriles, esters, phosphines, phosphinites, phosphites, sulfoxides, thioethers, amides, imines, aromatics, cyclic diolefins, olefins, isocyanides, and thiocyanates, and the like.

In the above general formulas (1) and (2), each of R¹, R², X¹, X², L¹ and L² may be bound solely to form a polydentate chelating ligand, and/or bound to each other in any combinations to form a polydentate chelating ligand.

In addition, as the ruthenium-carbene complex used in the present invention, among the compounds represented by the above general formula (1) or (2), the compound represented by the above general formula (1) is preferred, from the viewpoint of making the effects of the present invention more remarkable. In particular, the complex is more preferably a compound represented by the general formula (5) or the general formula (6) given below.

The general formula (5) is given hereinbelow.

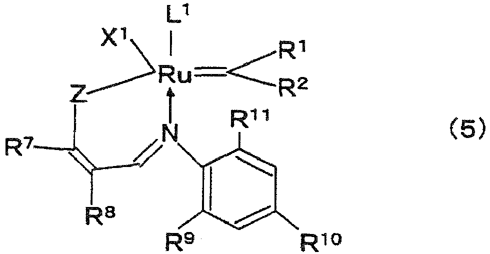

In the above general formula (5), Z is an oxygen atom, a sulfur atom, a selenium atom, NR¹², PR¹² or AsR¹², wherein R¹² is a hydrogen atom; a halogen atom; or an organic group having from 1 to 20 carbon atoms which may contain a halogen atom, an oxygen atom, a nitrogen atom, a sulfur atom, a phosphorus atom, or a silicon atom. Since the effects of the present invention are even more remarkable, it is preferable that Z is an oxygen atom.

Here, R¹, R², X¹ and L¹ are the same as defined in the cases of the above general formulas (1) and (2), each of which may be bound solely to form a polydentate chelating ligand and/or may be bound to each other in any combinations to form a polydentate chelating ligand, and it is preferable that X¹ and L¹ do not form a polydentate chelating ligand, and that R¹ and R² are bound to each other to form a ring, more preferably an indenylidene group which may have a substituent, and even more preferably a phenylindenylidene group.

In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above general formulas (1) and (2).

In the above general formula (5), each of R⁷ and R⁸ is independently a hydrogen atom, an alkyl group having from 1 to 20 carbon atoms, an alkenyl group having from 2 to 20 carbon atoms, or a heteroaryl group having from 6 to 20 carbon atoms, and these groups may have a substituent, or may be bound to each other to form a ring. Examples of the substituent include an alkyl group having from 1 to 10 carbon atoms, an alkoxy group having from 1 to 10 carbon atoms, or an aryl group having from 6 to 10 carbon atoms. The ring when a ring is formed may be any of aromatic rings, alicyclic rings, and heterocyclic rings. It is preferable that an aromatic ring is formed, it is more preferable that an aromatic ring having from 6 to 20 carbon atoms is formed, and it is even more preferable that an aromatic ring having from 6 to 10 carbon atoms is formed.

In the above general formula (5), each of R⁹, R¹⁰, and R¹¹ is independently a hydrogen atom; a halogen atom; or an organic group having from 1 to 20 carbon atoms which may contain a halogen atom, an oxygen atom, a nitrogen atom, a sulfur atom, a phosphorus atom, or a silicon atom, and these groups may have a substituent, or may be bound to each other to form a ring. In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above general formulas (1) and (2).

It is preferable that R⁹, R¹⁰ and R¹¹ are a hydrogen atom or an alkyl group having from 1 to 20 carbon atoms, and more preferably a hydrogen atom or an alkyl group having from 1 to 3 carbon atoms.

Here, specific examples of the compound represented by the above general formula (5) and production methods thereof include those described in, for example, WO 03/062253 (Japanese Unexamined Patent Publication No. 2005-515260), and the like.

The general formula (6) is given hereinbelow.

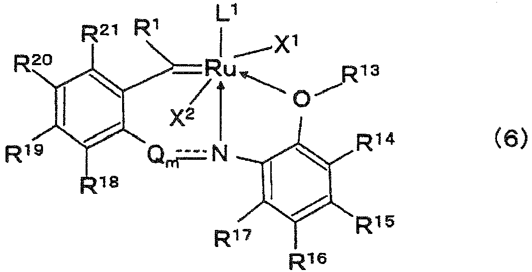

In the above general formula (6), m is 0 or 1. m is preferably 1, and in that case Q is an oxygen atom, a nitrogen atom, a sulfur atom, a methylene group, an ethylene group, or a carbonyl group, and preferably a methylene group.

- - - - is a single bond or a double bond, and preferably a single bond.

R¹, X¹, X² and L¹ are the same as the cases of the above general formulas (1) and (2), each of which may be bound solely to form a polydentate chelating ligand and/or may be bound to each other in any combinations to form a polydentate chelating ligand. It is preferable that X¹, X² and L¹ do not form a polydentate chelating ligand, and that R¹ is a hydrogen atom.

R¹³ to R²¹ are a hydrogen atom; a halogen atom; or an organic group having from 1 to 20 carbon atoms which may contain a halogen atom, an oxygen atom, a nitrogen atom, a sulfur atom, a phosphorus atom, or a silicon atom, and these groups may have a substituent, or may be bound to each other to form a ring. In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above general formulas (1) and (2).

R¹³ is preferably an alkyl group having from 1 to 20 carbon atoms, and more preferably an alkyl group having from 1 to 3 carbon atoms, R¹⁴ to R¹⁷ are preferably a hydrogen atom, and R¹⁸ to R²¹ are preferably a hydrogen atom or a halogen atom.

Here, specific examples of the compound represented by the above general formula (6) and production methods thereof include those described in, for example, WO 11/079799 (Japanese Unexamined Patent Publication No. 2013-516392), and the like.

In addition, as the above compound represented by the general formula (1), in addition to the above compound represented by the general formula (5) or general formula (6), the following compound (7) can be preferably used. In the compound (7), PCy₃ is tricyclohexylphosphine, and Mes is a mesityl group.

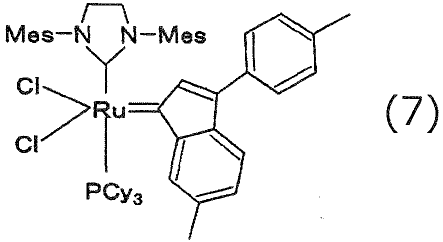

The content of the metathesis polymerization catalyst is preferably 0.005 mmol or more, more preferably from 0.01 to 50 mmol, and even more preferably from 0.015 to 20 mmol, per one mol of all the cycloolefin monomers used in the reaction.

The polymerizable composition may optionally contain a radical generator, a diisocyanate compound, a polyfunctional (meth)acrylate compound, and other optional components.

The radical generator has an action of generating radical with heating, thereby inducing a crosslinking reaction in the cycloolefin-based resin. A site at which a crosslinking reaction is induced by the radical generator is primarily a carbon-carbon double bond of the cycloolefin-based resin, and crosslinking may take place even at a saturated bond portion.

The radical generator includes organic peroxides, diazo compounds and nonpolar radical generators. The organic peroxide includes, for example, hydroperoxides such as *t*-butyl hydroperoxide, p-menthanehydroperoxide and cumene hydroperoxide; dialkyl peroxides such as di-*t*-butyl peroxide, dicumyl peroxide and *t*-butyl cumyl peroxide; diacyl peroxides such as dipropionyl peroxide and benzoyl peroxide; peroxyketals such as 2,5-dimethyl-2,5-di(*t-*butylperoxy)hexane, 2,5-dimethyl-2,5-di(*t*-butylperoxy)-3-hexyne, and 1,3-di(*t*-butylperoxyisopropyl)benzene; peroxyesters such as *t*-butyl peroxyacetate and *t*-butyl peroxybenzoate; peroxy carbonates such as *t*-butyl peroxy isopropylcarbonate and di(isopropylperoxy)dicarbonate; alkylsilyl peroxides such as *t*-butyl trimethylsilyl peroxide; and the like. Among them, the dialkyl peroxide is preferred, especially from the aspect that the impediment to the metathesis polymerization reaction in bulk polymerization is small.

The diazo compound includes, for example, 4,4'-bisazidobenzal(4-methyl)cyclohexanone, 4,4'-diazidochalcone, 2,6-bis(4'-azidobenzal)cyclohexanone, 2,6-bis(4'-azidobenzal)-4-methylcyclohexanone, 4,4'-diazidodiphenylsulfone, 4,4'-diazidodiphenylmethane, 2,2'-diazidostilbene and the like.

The nonpolar radical generator includes 2,3-dimethyl-2,3-diphenylbutane, 2,3-diphenylbutane, 1,4-diphenylbutane, 3,4-dimethyl-3,4-diphenylhexane, 1,1,2,2-tetraphenylethane, 2,2,3,3-tetraphenylbutane, 3,3,4,4-tetraphenylhexane, 1,1,2-triphenylpropane, 1,1,2-triphenylethane, triphenylmethane, 1,1,1-triphenylethane, 1,1,1-triphenylpropane, 1,1,1-triphenylbutane, 1,1,1-triphenylpentane, 1,1,1-triphenyl-2-propene, 1,1,1-triphenyl-4-pentene, 1,1,1-triphenyl-2-phenylethane and the like.

The amount of the radical generator in the polymerizable composition is usually from 0.1 to 10 parts by mass, and preferably from 0.5 to 5 parts by mass, based on 100 parts by mass of all the cycloolefin monomers used.

The diisocyanate compound includes, for example, aromatic diisocyanate compounds such as 4,4'-methylenediphenyl diisocyanate (MDI), toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 1,4-phenylene diisocyanate, tolylene diisocyanate, xylylene diisocyanate (XDI), 1,5-naphthalene diisocyanate, benzidine diisocyanate, *o*-nitrobenzidine diisocyanate, and 4,4'-diisocyanate dibenzyl; aliphatic diisocyanate compounds such as methylene diisocyanate, 1,4-tetramethylene diisocyanate, 1,6-hexamethylene diisocyanate, and 1,10-decamethylene diisocyanate; alicyclic diisocyanate compounds such as 4-cyclohexylene diisocyanate, 4,4'-methylenebis(cyclohexyl isocyanate), 1,5-tetrahydronaphthalene diisocyanate, isophorone diisocyanate, hydrogenated MDI, and hydrogenated XDI; and polyurethane prepolymers obtained by reacting these diisocyanate compounds with a low-molecular weight polyol or a polyamine to provide an isocyanate at its terminal; and the like. In addition, conventionally used known compounds that have a polyfunctional isocyanate group in the forms of isocyanurates, biurets, adducts, or polymerics of these compounds can be used without particular limitations. Such compounds include, for example, a 2,4-tolylene diisocyanate dimer, triphenylmethane triisocyanate, tris-(p-isocyanate phenyl) thiophosphite, polyfunctional aromatic isocyanate compounds, polyfunctional aromatic aliphatic isocyanate compounds, polyfunctional aliphatic isocyanate compounds, fatty acid-modified polyfunctional aliphatic isocyanate compounds, polyfunctional blocked isocyanate compounds such as blocked polyfunctional aliphatic isocyanate compounds, polyisocyanate prepolymers, and the like. Among them, from the viewpoint of having excellent availability and ease in handling, the aromatic diisocyanate compounds, the aliphatic diisocyanate compounds, and the alicyclic diisocyanate compounds, which are polyfunctional, non-blocked isocyanate compounds, are preferably used.

These compounds can be each used alone or in combination of two or more kinds.

Here, the polyfunctional blocked isocyanate compound refers to a compound that is made inert at an ambient temperature by reaction of at least two of isocyanate groups in its molecule with an active hydrogen-containing compound. The isocyanate compound generally has a structure in which the isocyanate groups are masked by blocking agents such as alcohols, phenols, ε-caprolactam, oximes, and active methylene compounds. Since a polyfunctional blocked isocyanate compound generally does not react at an ambient temperature, the compound has excellent storage stability, but an isocyanate group is regenerated by heating usually to from 140° to 200°C, whereby excellent reactivity can be exhibited.

The diisocyanate compound has an active hydrogen reactive group in its molecule that forms a chemical bond with a polyfunctional (meth)acrylate compound which is used together, preferably a hydroxyl group existing in a polyfunctional (meth)acrylate compound, a hydroxyl group of a surface of a fibrous filler, a hydroxyl group of a cycloolefin-based resin, or the like. Consequently, it is considered that the diisocyanate compound plays a role of improving close contact between the cycloolefin-based resin and the fibrous filler.

The diisocyanate compounds may be each used alone or in combination of two or more kinds. The amount of the diisocyanate compound blended to the polymerizable composition used in the present invention is preferably from 0.5 to 20 parts by mass, more preferably from 1 to 15 parts by mass, and even more preferably from 2 to 10 parts by mass, based on 100 parts by mass of all the cycloolefin monomers. The amount blended of within this range is preferred because close contact between the fibrous filler and the resin can be satisfied, while also controlling strength and heat resistance of the resin.

In addition, in the present invention, it is preferable that a polyfunctional (meth)acrylate compound is used, from the viewpoint of increasing close contact of the fibrous filler, thereby improving mechanical strength of the composite material molded article obtained. By using the compound together with a diisocyanate compound, it is assumed that the function of the diisocyanate compound as a close contact improving agent or a close contact enhancing agent is synergistically increased.

Preferred examples of the polyfunctional (meth)acrylate compound include a compound represented by the following general formula: 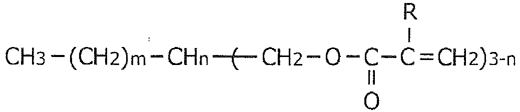 wherein R stands for H or CH₃; m is an integer of from 0 to 3; and n is 0 or 1. More specifically, the polyfunctional acrylate compound includes ethylene glycol dimethacrylate, triethylene glycol dimethacrylate, trimethylolpropane trimethacrylate, and neopentyl glycol dimethacrylate as preferred examples.

The polyfunctional acrylate compounds each may be used alone or in combination of two or more kinds. The amount of those compounds blended is preferably from 0.5 to 20 parts by mass, more preferably from 1 to 15 parts by mass, and even more preferably from 2 to 10 parts by mass, based on 100 parts by mass of all the cycloolefin monomers used. The amount blended of within this range is preferred because the function of the diisocyanate compound as a close contact improving agent or a close contact enhancing agent is synergistically increased, so that the close contact between the cycloolefin-based resin and the fibrous filler becomes excellent.

Other optional components include an activator, an activity regulator, an elastomer, an antioxidant, and the like.

The activator is a compound that acts as a cocatalyst of the metathesis polymerization catalyst mentioned above to improve polymerization activity of the catalyst. As an activator, for example, an alkylaluminum halide such as ethyl aluminum dichloride or diethyl aluminum chloride; an alkoxyalkylaluminum halide in which a part of alkyl groups of these alkylaluminum halides is substituted with an alkoxy group; an organotin compound; or the like may be used. The amount of the activator used is usually, but not particularly limited to, preferably from 0.1 to 100 mol, and more preferably from 1 to 10 mol, based on 1 mol of all the metathesis polymerization catalysts used in the polymerizable composition.

The activity regulator is used for preventing the polymerization to begin during the course of injection, upon mixing two or more reactive stock solutions to prepare a polymerizable composition, and injecting the composition in a mold to begin the polymerization.

An activity regulator when using a compound of a transition metal of Group 5 or Group 6 in the Periodic Table as a metathesis polymerization catalyst includes compounds having an action to reduce the metathesis polymerization catalyst or the like, and alcohols, halo alcohols, esters, ethers, nitriles, and the like can be used. Among them, alcohols and halo alcohols are preferable, and halo alcohols are more preferable.

Specific examples of alcohols include n-propanol, n-butanol, n-hexanol, 2-butanol, isobutyl alcohol, isopropyl alcohol, t-butyl alcohol and the like. Specific examples of halo alcohols include 1,3-dichloro-2-propanol, 2-chloroethanol, 1-chlorobutanol and the like.

An activity regulator when particularly using a ruthenium-carbene complex as a metathesis polymerization catalyst includes Lewis base compounds. The Lewis base compound includes Lewis base compounds containing a phosphorus atom such as tricyclopentyl phosphine, tricyclohexyl phosphine, triphenyl phosphine, triphenyl phosphite, and n-butyl phosphine; Lewis base compounds containing a nitrogen atom such as n-butylamine, pyridine, 4-vinylpyridine, acetonitrile, ethylenediamine, N-benzylidene methylamine, pyrazine, piperidine, and imidazole; and the like. Also, norbornenes substituted by an alkenyl group such as vinylnorbornene, propenylnorbornene and isopropenylnorbornene act as the above cycloolefin monomer, and also as an activity regulator at the same time. The amount of these active regulators used may be properly adjusted depending upon the compounds used.

The elastomer includes, for example, natural rubber, polybutadiene, polyisoprene, styrene-butadiene copolymer (SBR), styrene-butadiene-styrene block copolymer (SBS), styrene-isoprene-styrene copolymer (SIS), ethylene-propylene-diene terpolymer (EPDM), ethylene-vinyl acetate copolymer (EVA) and hydrogenated products of these, and the like. By using an elastomer to be dissolved in the polymerizable composition, the viscosity thereof can be controlled. Also, by adding an elastomer, the impact resistance of the composite material molded article obtained can be improved. The amount of the elastomer used is preferably from 0.5 to 20 parts by mass, and more preferably from 2 to 10 parts by mass, based on 100 parts by mass of all the cycloolefin monomers in the polymerizable composition.

The antioxidant includes various antioxidants for plastics and rubbers such as phenolic, phosphorus-based, and amine-based antioxidants.

The polymerizable composition used in the present invention is prepared by properly mixing each of the components mentioned above in accordance with a known method, or the polymerizable composition may be prepared by mixing two or more reactive stock solutions immediately before injection into the airproof space. The reactive stock solutions are prepared in such a manner that the components mentioned above are each divided into two or more solutions so that the stock solutions do not undergo bulk polymerization with a single solution, but a polymerizable composition containing each of the components in a given ratio is formed when all the solutions are mixed. A combination of the two or more reactive stock solutions includes the following two types, (a) and (b), according to the kinds of the metathesis polymerization catalyst used.
(a): As the above metathesis polymerization catalyst, those exhibiting polymerization reaction activity when used together with an activator, but not having polymerization reaction activity when used alone, can be used. In this case, a polymerizable composition can be obtained by using a reactive stock solution (liquid A) including a cycloolefin monomer and an activator and another reactive stock solution (liquid B) including a cycloolefin monomer and a metathesis polymerization catalyst, and mixing these components. Further, a reactive stock solution (liquid C) including a cycloolefin monomer but not including any one of a metathesis polymerization catalyst and an activator may be used together.
(b): Also, when a metathesis polymerization catalyst having polymerization reaction activity is used alone, the polymerizable composition can be obtained by mixing a reactive stock solution (i) including a cycloolefin monomer and a reactive stock solution (ii) including a metathesis polymerization catalyst. As the reactive stock solution (ii) in this case, a solution or dispersion prepared by dissolving or dispersing a metathesis polymerization catalyst in a small amount of an inert solvent is usually used. The solvent includes, for example, aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2-pentanone; cyclic ethers such as tetrahydrofuran; diethyl ether, dichloromethane, dimethyl sulfoxide, ethyl acetate and the like. Among them, the aromatic hydrocarbons are preferred, and toluene is more preferred.

The radical generator, the diisocyanate compound, the polyfunctional (meth)acrylate compound, and the optional components may be contained in any of the above reactive stock solutions, or they may be added in the form of a liquid mixture other than the above reactive stock solutions.

The mixing apparatus usable in mixing the above reaction stock solutions includes, for example, collision mixers generally used in reaction injection-molding methods, low-pressure mixers such as dynamic mixers and static mixers, and the like.

In addition, it is preferable that the resin material has a viscosity at 20°C of 0.2 Pa•s or less, in order to accelerate impregnation into the fibrous filler layer. The viscosity is measured with a B-type viscometer.

From this viewpoint, in a case where a resin material is a thermoplastic resin, the embodiment of the resin upon supplying may be a molten state by previously heating, thereby lowering its viscosity.

Here, the resin material may be properly blended with an additive such as an antioxidant, a flame retardant, a thermal stabilizer, an ultraviolet absorbent, or a photostabilizer, in consideration of the use of pigments for coloration, durability after molding, and the like.

A resin material is injected into an airproof space to allow impregnation of the resin material with the fibrous filler. The injection of the resin material is usually carried out at an ambient temperature of from 10°C to 30°C, and the injection may be properly adjusted depending upon the temperature and the resin liquid temperature.

When the resin material is completely cured or semi-cured or completely solidified or semi-solidified (for example, if completely cured, after 24 hours passed from the completion of the impregnation of the resin material), a composite material molded article can be obtained by removing an airproof film, and, if used, a mold releasing film, resin flow material or the like.

### EXAMPLES

The present invention will be described hereinbelow by means of Examples, without intending to limit the present invention to these Examples. Here, "parts" or "%" are on mass basis unless specified otherwise.

### < Production Example of Composite Material Molded Article >

Twenty plies of unidirectional carbon fibers U-200C (basis weight: 200 g/m²) manufactured by Nissei Kabushiki Kaisha cut out at a length of 300 mm and a width of 250 mm were symmetrically laminated in the same orientation on a mold made of Aluminum 5052 having an internal length of 300 mm, a width of 250 mm, and a depth of 4 mm, which was previously subjected to mold release treatment. The fibrous filler used in this example was a unidirectional material laminated in the same direction, so that the composite material molded article obtained after molding is a unidirectional material.

On the above fibrous filler were laminated a mold-release film "Dahlar(registered trademark)" manufactured by AirTech, a resin flow material "Greenflow(registered trademark)" manufactured by the same, and an airproof film "IPPLON(registered trademark) KM1300" manufactured by the same in this order. The back side of the airproof film of the uppermost layer and the aluminum mold were bonded with a double-sided adhesive tape in which front and back sides were adhered with an adhesive polymethyl methacrylate used in Sample 2 described later, and an airproof space was formed as an integrated material. Thereafter, an internal of the airproof space was subjected to a reduced pressure to 100 Pa with an oil pump.

Thirty-two grams of a polymerizable composition set at 20°C, composed of 100 parts by mass of RIM monomer manufactured by Nippon Zeon Co., Ltd., 5 parts by mass of trimethylolpropane trimethacrylate (TMPT), 5 parts by mass of 4,4'-methylenediphenyl diisocyanate, 1.7 parts by mass of di-*t*-butyl peroxide manufactured by Kayaku Akuzo Corporation under the manufactured product name of "Kayabutyl D(Registered Trademark), and 0.04 parts by mass of a metathesis polymerization catalyst the above compound (7), the polymerizable composition having a viscosity at 20°C of 10 mPa•s, was fully introduced into an integrated material obtained above (hereinafter referred to as "mold") to allow the fibers to be impregnated with the polymerizable composition. Here, at that time, the mold was set to 40°C. The pressure reducing line and the composition introducing line were closed, and the mold was allowed to stand for 1 hour. Subsequently, the temperature of the mold was raised to 90°C and allowed to stand for 0.5 hours, and thereafter the temperature was further raised to 200°C and allowed to stand thereat for 1 hour, to give a composite material molded article. Here, the components of the above RIM monomers were composed of about 90 parts by mass of dicyclopentadiene and about 10 parts by mass of tricyclopentadiene, and the amount of the metathesis polymerization catalyst used was 0.055 mmol based on 1 mol of all these cycloolefin monomers.

The following Samples 1 to 3 were prepared using the polymerizable composition used in the production of the composite material molded article, and evaluated.

### < Preparation of Sample 1 >

A polymerizable composition was allowed to stand at 50°C for 24 hours.

### < Preparation of Sample 2 >

One gram of polymethyl methacrylate (adhesive) (weight-average molecular weight: 420,000) was immersed in 100 g of the polymerizable composition, and the mixture was allowed to stand at 50°C for 24 hours.

### < Preparation of Sample 3 >

One gram of butyl rubber (adhesive) "AT200-Y" manufactured by AirTech was immersed in 100 g of the polymerizable composition, and the mixture was allowed to stand at 50°C for 24 hours.

### < Evaluation of Samples >

(1) Twenty grams of the supernatant was collected from the sample that was allowed to stand at 50°C for 24 hours, and the transparency was visually observed.
(2) When the turbidity was not confirmed in the supernatant, the supernatant was cured with the above compound (7), and the transparency of a cured product was visually observed.
(3) When the turbidity was not confirmed in the cured product, the infrared absorption measurements were carried out by ATR method (Attenuated Total Reflection method) to confirm the presence or absence of the admixture of an adhesive.

The above results are shown in Table 1.

### [Table 1]

**Table 1**

| | Adhesive | Supernatant | Cured Product | |
|---|---|---|---|---|
| | | Transparency | Transparency | Admixture of Adhesive |
| Sample 1 | Absent | Excellent | Excellent | Absent |
| Sample 2 | Polymethyl methacrylate | Excellent | Excellent | Absent (Adhesive component undetected) |
| Sample 3 | Butyl rubber | Some turbidity | Not performed | Not performed |

It can be seen from the above results that the polymethyl methacrylate, which is a methacrylic polymer, can be used as an adhesive that does not admix with the resin material in the production of the composite material molded article, so that the transparency of the cured product is not impaired.

### INDUSTRIAL APPLICABILITY

The composite material molded article obtained by the method of the present invention can be suitably used in fields in which composite materials of fibrous fillers such as glass fibers and carbon fibers are generally used, for example, housings, structural members, and the like for moving objects or movable objects.

## Claims

1. A method for producing a composite material molded article, comprising
laminating a fibrous filler on a mold;
pressure-reducing inside an airproof space, the airproof space being formed with the mold laminated with the fibrous filler and an airproof film covering thereon; and
impregnating a resin material in the fibrous filler,
the formation of the airproof space comprising bonding the mold and the airproof film with a seal material comprising a (meth)acrylic polymer as an adhesive.

2. The method according to claim 1, wherein the fibrous filler is carbon fibers and/or glass fibers.

3. The method according to claim 1 or 2, wherein the resin material is a polymerizable composition comprising a cycloolefin monomer and a metathesis polymerization catalyst.

4. The method according to any one of claims 1 to 3, wherein the seal material is a double-sided tape in which a (meth)acrylate polymer is adhered on front and back sides as an adhesive.
